# FASCICULE DE BREVET EUROPEEN

(11) **EP 3 325 842 B1**
(45) Date de publication et mention de la délivrance du brevet: **01.01.2020**
(21) Numéro de dépôt: 16757288.2
(22) Date de dépôt: 20.07.2016
(51) Int. Cl.: F16C 35/067, F16C 9/02, F16C 33/36, F16F 15/315

(54) **ASSEMBLAGE D'UNE PORTION D'EXTRÉMITÉ DE VILEBREQUIN AVEC UN VOLANT D'INERTIE ET UN PALIER DE GUIDAGE, ET ENSEMBLE MOTEUR ASSOCIÉ**
ANORDNUNG EINES KURBELWELLENENDTEILS MIT EINEM SCHWUNGRAD UND FÜHRUNGSLAGER SOWIE ENTSPRECHENDE MOTORANORDNUNG
ASSEMBLY OF A CRANKSHAFT END PORTION WITH A FLYWHEEL AND A GUIDE BEARING, AND RELATED ENGINE ASSEMBLY

(30) Priorité: 21.07.2015 FR 1556894
(43) Date de publication de la demande: 30.05.2018
(73) Titulaire: NTN-SNR Roulements, 74010 Annecy (FR)
(72) Inventeur: PAQUIEN, Marc, 74290 Talloires Montmin (FR)
(74) Mandataire: Alatis
(86) Numéro de dépôt international: PCT/FR2016/051879
(87) Numéro de publication internationale: WO 2017/013359

(56) Documents cités:
- DE-A1-102009 025 151
- GB-A- 2 168 784
- JP-A- S6 088 244
- US-A- 4 668 116

## Description

### DOMAINE TECHNIQUE DE L'INVENTION

L'invention se rapporte à un assemblage coaxial entre un volant d'inertie et un vilebrequin, intégrant un palier de guidage.

### ÉTAT DE LA TECHNIQUE ANTÉRIEURE

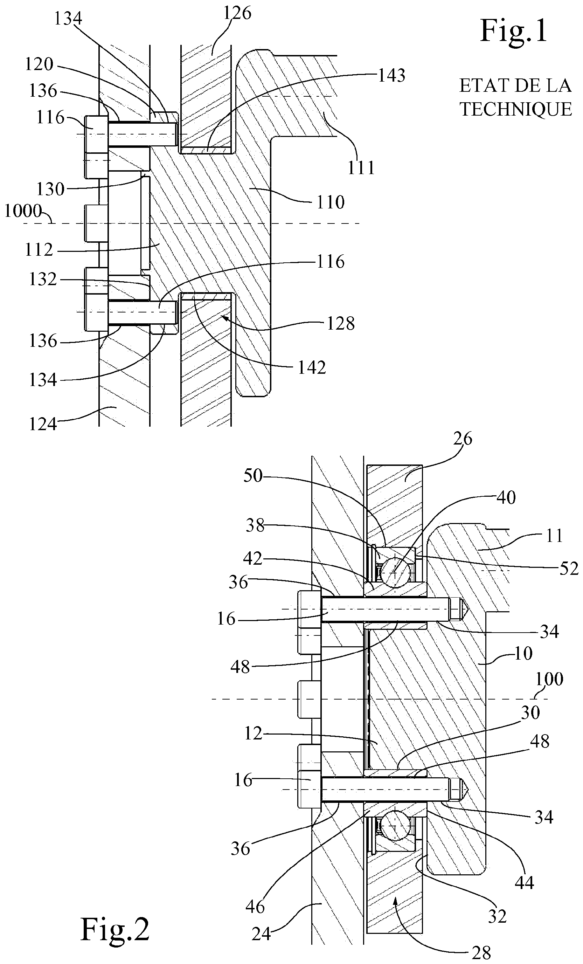

Suivant l'état de la technique illustré sur la figure **1****,** un vilebrequin **110** de moteur à combustion interne présente une portion d'extrémité **112** guidée en rotation autour d'un axe de révolution **100** par rapport à un carter moteur **126** grâce à un palier lisse **128,** cette extrémité **112** comportant une collerette **120** faisant saillie à l'extérieur du carter moteur **126.** La collerette **120** forme une portée de positionnement **130** tournée radialement vers l'extérieur et un épaulement **132** sur lequel débouchent des trous filetés **134,** et constitue ainsi une interface de fixation pour un volant d'inertie **124,** qui vient se positionner sur la portée de positionnement **130** en appui direct contre l'épaulement **132.** Le volant d'inertie **124** est pourvu d'alésages **136** alignés avec les trous filetés **134,** la fixation du volant d'inertie **124** au vilebrequin **110** étant assurée par des vis de fixation **116** traversant les alésages **136** et visées dans les trous filetés **134.** Avec un assemblage de ce type, le palier lisse **128** est constitué d'un coussinet **142** en deux parties au moins, positionné sur un tourillon **143** du vilebrequin confiné entre la collerette **120** et la première manivelle **111** du vilebrequin **110.**

L'exemple de l'état de la technique plus proche est décrit par le document GB 2 168 784 A qui divulgue les caractéristiques du préambule de la revendication 1.

L'évolution récente des moteurs à combustion interne à faible consommation vers des régimes moteurs à faible vitesse de rotation et couple moteur élevé, avec des fonctionnements intermittents en mode arrêt/démarrage, induisant une tension importante sur la courroie d'entraînement des accessoires, et des interruptions de la pompe à huile, sollicite fortement les paliers lisses, notamment au démarrage et durant les périodes transitoires à froid. Il peut ainsi être avantageux de remplacer certains des paliers lisses du vilebrequin, notamment le palier à coussinet en deux parties à l'extrémité du vilebrequin portant le volant d'inertie, par des paliers à roulement, plus performants à froid. On se heurte alors à un problème de montage, du fait du confinement du tourillon entre la collerette et la première manivelle du vilebrequin qui impose soit une bague interne de roulement en deux parties, solution peu performante, soit un chemin de roulement directement formé sur le vilebrequin, comme suggéré dans le document FR 2 906 167. Cette solution est particulièrement coûteuse et ne permet pas d'optimiser le choix du matériau constitutif du chemin de roulement. Une autre solution consisterait à éliminer la collerette, mais avec l'inconvénient de réduire considérablement la surface disponible pour réaliser la fixation du volant d'inertie au vilebrequin, donc de diminuer le nombre de vis de fixation, mais aussi de diminuer le diamètre de fixation des vis donc, pour un couple nominal donné, d'augmenter les efforts de cisaillement subits par chaque vis.

Le confinement du tourillon **143** entre la collerette **120** et la première manivelle **111** du vilebrequin **110** pose également un problème si l'on souhaite augmenter la performance du palier lisse **128** en remplaçant le coussinet en deux parties **142** par un coussinet annulaire monobloc.

### EXPOSÉ DE L'INVENTION

L'invention vise à remédier aux inconvénients de l'état de la technique et à proposer un assemblage entre un vilebrequin et un volant d'inertie qui permette un guidage en rotation plus performant, notamment à froid. Pour ce faire est proposé, selon un premier aspect de l'invention, un assemblage comprenant une portion d'extrémité de vilebrequin définissant un axe de révolution formant au moins une première portée tournée radialement vers l'extérieur et un épaulement sur lequel débouchent des trous filetés, un volant d'inertie comportant des alésages axiaux, un palier de guidage du vilebrequin par rapport à un carter moteur, en rotation autour de l'axe de révolution, et des vis de fixation. Le palier de guidage comporte au moins une bague de guidage monobloc positionnée sur la première portée et présentant une première face transversale en appui axial sur l'épaulement, la bague de guidage monobloc comportant des alésages axiaux alignés avec les trous filetés du vilebrequin et les alésages axiaux du volant d'inertie. La fixation du volant d'inertie à la portion d'extrémité du vilebrequin est réalisée par les vis de fixation qui traversent les alésages axiaux du volant d'inertie et de la bague de guidage monobloc et viennent se visser dans les trous filetés de l'épaulement de la portion d'extrémité du vilebrequin.

L'assemblage ainsi défini, en éliminant la collerette de l'état de la technique, permet le montage d'une bague de guidage monobloc, qui peut être un coussinet annulaire monobloc de palier lisse, une bague intérieure de roulement ou une bague mixte. En disposant les alésages axiaux sur la bague, l'élimination de la collerette ne se fait pas au détriment de la surface disponible pour le positionnement des vis de fixation. On peut ainsi prévoir des vis de fixation en nombre suffisant pour limiter les efforts de cisaillement sur chaque vis. Enfin, l'élimination de la collerette réduit l'encombrement axial de l'assemblage.

De préférence, le volant d'inertie est en appui axial direct ou indirect contre une deuxième face transversale de la bague de guidage monobloc opposée à la première face transversale. La bague constitue une entretoise pincée entre l'épaulement de la portion d'extrémité du vilebrequin et le volant d'inertie.

De préférence, la bague de guidage monobloc est frettée sur la première portée de la portion d'extrémité du vilebrequin et présente une surface tournée radialement vers l'intérieur, complémentaire de la surface de la première portée. La première portée de la portion d'extrémité du vilebrequin est de préférence cylindrique.

Selon un mode de réalisation, le volant d'inertie est glissé sur l'extrémité du vilebrequin, et comporte un alésage central ayant une surface tournée radialement vers l'intérieur complémentaire de la surface de la portée du vilebrequin, l'appui axial direct ou indirect contre la deuxième face transversale de la bague de guidage monobloc opposée à la première face transversale pouvant être toujours réalisé comme précédemment décrit.

Suivant un mode de réalisation, le palier comporte au moins un élément de palier lisse. La bague de guidage monobloc comporte alors une piste de glissement tourné radialement vers l'extérieur.

Suivant un autre mode de réalisation, le palier comporte au moins un élément de palier à roulement. La bague de guidage monobloc peut alors être une bague intérieure de roulement sur laquelle est formé au moins un chemin de roulement tourné radialement vers l'extérieur. Le palier de guidage peut dans ce cas également comporter en outre au moins une bague extérieure de roulement sur laquelle est formé au moins un chemin de roulement tourné radialement vers l'intérieur, et des corps roulants se déplaçant sur les chemins de roulement des bagues intérieure et extérieure. La bague extérieure du palier de guidage est de préférence monté avec un ajustement serré, par exemple par frettage, dans une portée du carter, tournée radialement vers l'intérieur.

De manière remarquable, le palier de guidage peut comporter un élément de palier à roulement contigu à un élément de palier lisse ou à un deuxième élément de palier à roulement par exemple, les deux éléments de palier pouvant être réalisés sur une bague de guidage intérieure commune ou sur plusieurs bagues intérieures.

Suivant un autre aspect de l'invention, celle-ci a trait à un ensemble moteur comportant un carter de moteur et un assemblage tel que précédemment décrit. De préférence, la bague de guidage présente une face transversale qui fait saillie hors du carter moteur, pour permettre que le volant d'inertie vienne en appui axial direct ou indirect contre la bague de guidage monobloc. Dans le cas d'un assemblage comportant un palier à roulement, la bague extérieure du palier de guidage est de préférence frettée dans une portée du carter tournée radialement vers l'intérieur.

### BRÈVE DESCRIPTION DES FIGURES

D'autres caractéristiques et avantages de l'invention ressortiront à la lecture de la description qui suit, en référence aux figures annexées qui illustrent :
- la figure 1, une coupe axiale d'un assemblage de volant d'inertie sur un vilebrequin selon l'état de la technique antérieure, décrit précédemment ;
- la figure 2, une coupe axiale d'un assemblage suivant un premier mode de réalisation de l'invention ;
- les figures 3A et 3B, des coupes axiale et transversale d'un assemblage suivant un deuxième mode de réalisation de l'invention ;
- la figure 4A une coupe axiale d'un assemblage suivant un troisième mode de réalisation de l'invention ;
- la figure 4B une coupe de l'assemblage de la figure 4A dans un plan parallèle au plan de la figure 4A, mais décalé de celui-ci ;
- la figure 4C une vue isométrique d'un palier à roulement de l'assemblage de la figure 4A ;
- la figure 5 une coupe axiale d'un assemblage suivant un quatrième mode de réalisation de l'invention ;
- la figure 6 une coupe axiale d'un assemblage suivant un cinquième mode de réalisation de l'invention.

Pour plus de clarté, les éléments identiques ou similaires sont repérés par des signes de référence identiques sur l'ensemble des figures.

### DESCRIPTION DÉTAILLÉE DE MODES DE RÉALISATION

Sur la figure **2** est illustré un assemblage selon un premier mode de réalisation de l'invention, comportant un vilebrequin **10** guidé en rotation dans un carter moteur **26** par l'intermédiaire d'un palier de guidage **28,** et auquel est fixé un volant d'inertie **24** par des vis de fixation **16.**

Le vilebrequin **10** comporte des manivelles **11** et une portion d'extrémité **12,** qui forme une première portée **30,** ici cylindrique, tournée radialement vers l'extérieur, et un épaulement **32** sur lequel débouchent des trous axiaux filetés **34.** Le volant d'inertie **24** comporte une pluralité d'alésages axiaux **36** alignés avec les trous axiaux filetés **34** de la portion d'extrémité **12** du vilebrequin. Le palier de guidage **28** assure le guidage en rotation du vilebrequin et du volant d'inertie **24** autour d'un axe de révolution **100** et se compose d'une bague extérieure de roulement **38** montée avec un ajustement serré dans une ouverture **50** du carter moteur **26,** en appui contre un épaulement **52** de l'ouverture, de corps roulants **40** et d'une bague intérieure de roulement **42.** La bague intérieure de roulement **42** a deux faces transversales d'appui **44** et **46** et est de plus percée d'une pluralité d'alésages axiaux **48,** alignés avec les trous filetés **34** de la portion d'extrémité du vilebrequin.

Le montage des différents éléments de l'assemblage peut être fait de la manière suivante. Le palier à roulement **28** est préassemblé, et sa bague intérieure **42** est frettée sur la première portée **30** de la portion d'extrémité **12,** la face transversale **44** de la bague intérieure venant en appui sur l'épaulement **32** du vilebrequin. On insère le sous-ensemble constitué du vilebrequin **10** et du palier à roulement **28** à l'intérieur du carter moteur **26** en deux parties, en positionnant la bague extérieure **38** en appui contre l'épaulement **52** du carter. Le carter moteur **26** est ensuite refermé et le volant d'inertie **24** est fixé au sous-ensemble constitué du vilebrequin **10** et du palier à roulement **28** par les vis de fixation **16** vissées dans les trous filetés **34** du vilebrequin au travers des alésages **36** du volant d'inertie **24** et de la bague intérieure **42** du palier à roulement jusqu'à obtenir un appui du volant d'inertie **24** sur la face transversale **46** de la bague intérieure **42** du palier à roulement, qui fait saillie à l'extérieur du carter moteur **26.** A l'état assemblé, un jeu subsiste entre le volant d'inertie **24** et le carter moteur **26.**

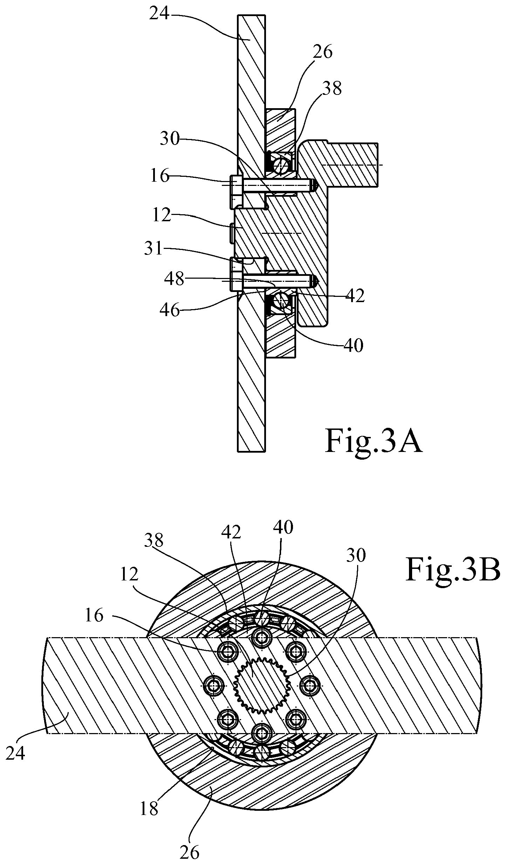

Suivant un deuxième mode de réalisation illustré sur la figure **3A** et **3B****,** la portion d'extrémité **12** du vilebrequin est sensiblement plus longue et le volant d'inertie est glissé sur une deuxième portée **31** par un alésage central dont la surface radiale tournée vers l'intérieur est complémentaire de la surface de la deuxième portée **31,** cylindrique, cannelée ou autre. Comme précédemment, le volant d'inertie vient en appui sur la face transversale **46** de la bague intérieure du palier à roulement pour une fixation solidaire avec le vilebrequin.

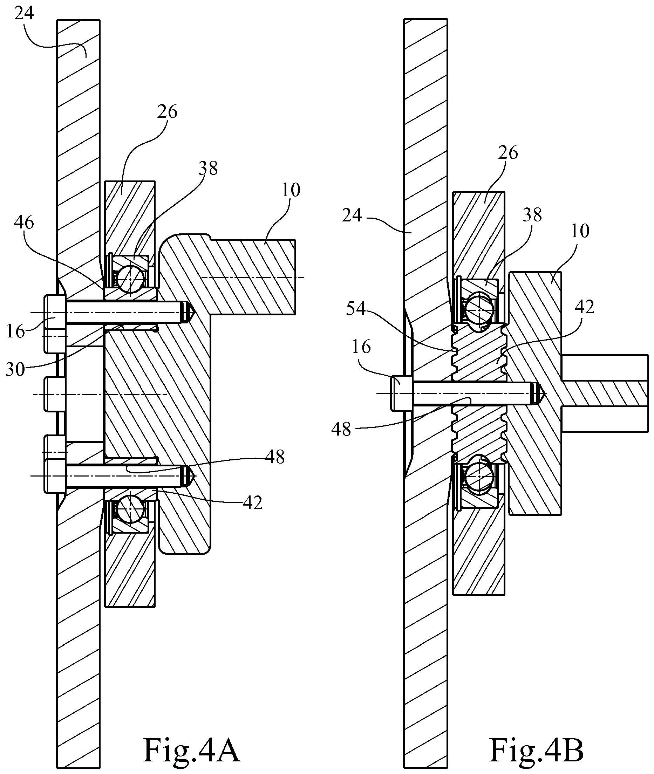

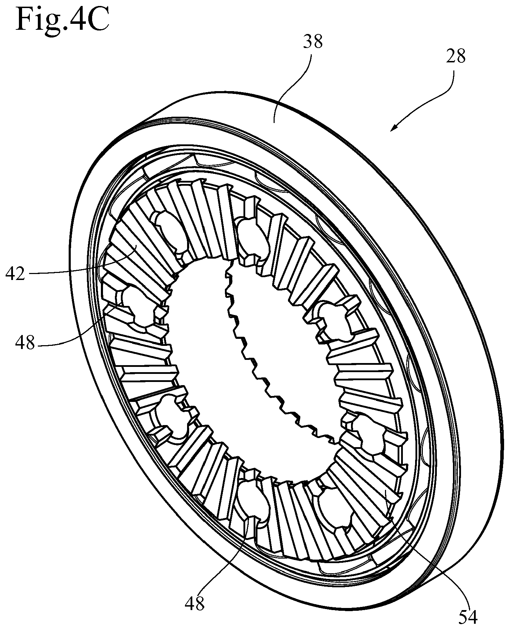

Suivant un troisième mode de réalisation illustré sur les figures **4A, 4B** et **4C****,** la face transversale **46** de la bague intérieure **42** est pourvue de reliefs, qui peuvent par exemple des rainures radiales **54** réparties sur toute la circonférence ou sur un ou plusieurs secteurs angulaires, et dans lesquelles viennent s'insérer des reliefs conjugués, par exemple des nervures radiales correspondantes formées sur le volant d'inertie **24.**

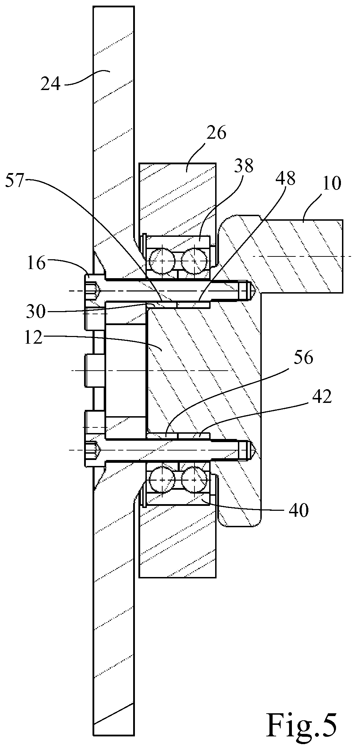

Suivant un quatrième mode de réalisation illustré sur la figure **5****,** le palier à roulement **28** comporte deux bagues intérieures **42, 56,** toutes deux frettées sur la première portée cylindrique **30** et percées par des alésages **48, 57** pour permettre le passage des vis de fixation **16.**

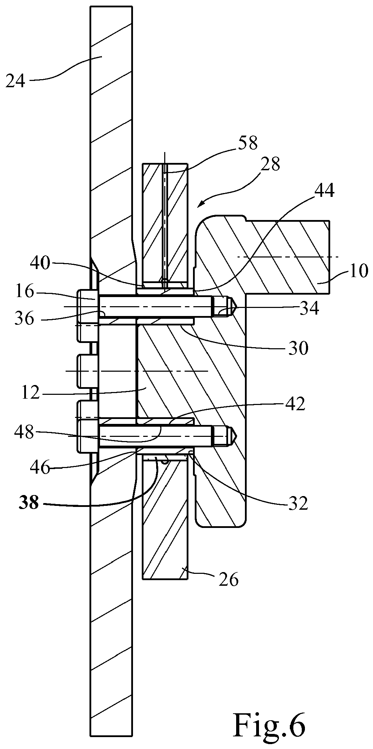

Suivant un cinquième mode de réalisation illustré sur la figure **6****,** le palier 28 est un palier lisse, comportant une bague de glissement **42** monobloc frettée sur la première portée **30** de la portion d'extrémité du vilebrequin et une bague de glissement extérieure **38** solidaire du carter **26** directement interposée entre le vilebrequin et le carter moteur **26.** La bague de glissement **42** présente une première face transversale **44** en appui axial sur l'épaulement **32,** une deuxième face transversale **46** en saillie à l'extérieur du carter **26** et appui contre le volant d'inertie **24,** et des alésages axiaux **48** alignés avec les trous filetés **34** du vilebrequin **10** et les alésages axiaux **36** du volant d'inertie **24** et traversés par les vis **16.** Un conduit **58** permet d'alimenter en huile l'interface entre la bague de glissement fixe **38** et la bague de glissement tournante **42** de manière à y constituer un film d'huile.

Dans des variantes non représentées ici, le palier de guidage peut combiner des paliers lisses et des paliers à roulement, ce qui permet en plus un fonctionnement à vitesse de rotation importante.

Naturellement, les exemples représentés sur les figures et discutés ci-dessus ne sont donnés qu'à titre illustratif et non limitatif. Les portées **30, 31** peuvent avoir des profils divers, cylindriques, tronconiques, cannelées, oblongues, elliptique, avec un rainure de clavette en regard d'une rainure réalisée sur le vilebrequin, ou autre, pour augmenter la transmission du couple et limiter le cisaillement des vis de fixation **16.**

Il est explicitement prévu que l'on puisse combiner entre eux les différents modes de réalisation illustrés pour en proposer d'autres, sans partir de l'entendue de la protection défini par les revendications.

## Revendications

1. Assemblage comprenant:
- une portion d'extrémité (12) de vilebrequin (10) définissant un axe de révolution (100), formant au moins une première portée (30) tournée radialement vers l'extérieur et un épaulement (32) sur lequel débouchent des trous filetés (34) ;
- un volant d'inertie (24) comportant des alésages axiaux (36) ;
- des vis de fixation (16) traversant les alésages axiaux du volant d'inertie et vissées dans les trous filetés de la portion d'extrémité de vilebrequin, rendant le volant d'inertie solidaire de la portion d'extrémité de vilebrequin ; et
- un palier de guidage (28) du vilebrequin par rapport à un carter moteur (26) en rotation autour de l'axe de révolution ;
**caractérisé en ce que** le palier de guidage comporte au moins une bague de guidage monobloc (42) positionnée sur la première portée (30) et présentant une première face transversale (44) en appui axial sur l'épaulement (32), la bague de guidage monobloc comportant des alésages axiaux (48) alignés avec les trous filetés du vilebrequin (34) et les alésages axiaux du volant d'inertie (36) et traversés par les vis (16).

2. Assemblage selon la revendication 1 **caractérisé en ce que** le volant d'inertie est en appui axial direct ou indirect contre une deuxième face transversale (46) de la bague de guidage monobloc opposée à la première face transversale (44).

3. Assemblage selon l'une quelconque des revendications précédentes **caractérisé en ce que** la bague de guidage monobloc (42) est frettée sur la première portée et présente une surface tournée radialement vers l'intérieur, complémentaire de la première portée (30).

4. Assemblage selon l'une quelconque des revendications précédentes, **caractérisé en ce que** la première portée (30) est cylindrique.

5. Assemblage selon l'une quelconque des revendications précédentes, **caractérisé en ce que** le volant d'inertie (24) est glissé sur une deuxième portée (31) formée sur la portion d'extrémité (12) du vilebrequin, le volant d'inertie (24) comportant un alésage central ayant une surface tournée radialement vers l'intérieur complémentaire de la surface de la deuxième portée (31) du vilebrequin.

6. Assemblage selon la revendication précédente, **caractérisé en ce que** la deuxième portée (31) de la portion d'extrémité du vilebrequin est cannelée.

7. Assemblage selon l'une quelconque des revendications précédentes, **caractérisé en ce que** la bague de guidage monobloc comporte une piste de glissement tourné radialement vers l'extérieur.

8. Assemblage selon l'une quelconque des revendications précédentes, **caractérisé en ce que** la bague de guidage monobloc est une bague intérieure de roulement sur laquelle est formé au moins un chemin de roulement tourné radialement vers l'extérieur.

9. Assemblage selon la revendication 8, **caractérisé en ce que** le palier de guidage comporte en outre au moins une bague extérieure de roulement (38) sur laquelle est formé au moins un chemin de roulement tourné radialement vers l'intérieur et des corps roulants (40) se déplaçant sur les chemins de roulement des bagues intérieure et extérieure.

10. Ensemble moteur comportant un carter de moteur (26) **caractérisé en ce qu'**il comporte un assemblage selon l'une quelconque des revendications précédentes.

11. Ensemble moteur selon la revendication 10, **caractérisé en ce que** l'assemblage est selon la revendication 2 et la bague de guidage (42) fait saillie hors du carter moteur (26).

12. Ensemble moteur selon l'une quelconque des revendications 10 ou 11, **caractérisé en ce que** l'assemblage est selon la revendication 9, la bague extérieure du palier de guidage étant montée ajustée serrée dans une portée (50) du carter moteur (26) tournée radialement vers l'intérieur.

## Patentansprüche

1. Baugruppe, die Folgendes umfasst:
- den Endabschnitt (12) einer Kurbelwelle (10), der eine Drehachse (100) definiert und mindestens einen ersten, radial nach außen gerichteten Lagersitz (30) und eine Schulter (32) bildet, zu der Gewindebohrungen (34) führen;
- ein Schwungrad (24) mit axialen Bohrungen (36);
- Befestigungsschrauben (16), die durch die axialen Bohrungen des Schwungrads führen und in die Gewindebohrungen des Kurbelwellenendabschnitts eingeschraubt sind, wodurch das Schwungrad fest mit dem Kurbelwellenendabschnitt verbunden ist; und
- ein Lager zum Führen (28) der Kurbelwelle in Bezug auf ein Motorgehäuse (26), das sich um die Drehachse dreht;
**dadurch gekennzeichnet, dass** das Führungslager mindestens einen einteiligen Führungsring (42) umfasst, der auf dem ersten Lagersitz (30) positioniert ist und eine erste Querfläche (44) aufweist, die axial an der Schulter (32) anliegt, wobei der einteilige Führungsring axiale Bohrungen (48) umfasst, die auf die Gewindebohrungen der Kurbelwelle (34) und die axialen Bohrungen des Schwungrads (36) ausgerichtet sind und durch welche die Schrauben (16) führen.

2. Baugruppe nach Anspruch 1, **dadurch gekennzeichnet, dass** das Schwungrad direkt oder indirekt axial an einer zweiten Querfläche (46) des einteiligen Führungsrings gegenüber der ersten Querfläche (44) anliegt.

3. Baugruppe nach einem der vorhergehenden Ansprüche, **dadurch gekennzeichnet, dass** der einteilige Führungsring (42) auf den ersten Lagersitz aufgeschrumpft ist und eine radial nach innen gerichtete Oberfläche aufweist, die komplementär zum ersten Lagersitz (30) ausgebildet ist.

4. Baugruppe nach einem der vorhergehenden Ansprüche, **dadurch gekennzeichnet, dass** der erste Lagersitz (30) zylindrisch ist.

5. Baugruppe nach einem der vorhergehenden Ansprüche, **dadurch gekennzeichnet, dass** das Schwungrad (24) auf einen zweiten, am Endabschnitt (12) der Kurbelwelle ausgebildeten Lagersitz (31) aufgeschoben ist, wobei das Schwungrad (24) eine zentrale Bohrung mit einer radial nach innen gerichteten Oberfläche umfasst, die komplementär zur Oberfläche des zweiten Lagersitzes (31) der Kurbelwelle ausgebildet ist.

6. Baugruppe nach dem vorhergehenden Anspruch, **dadurch gekennzeichnet, dass** der zweite Lagersitz (31) des Endabschnitts der Kurbelwelle geriffelt ist.

7. Baugruppe nach einem der vorhergehenden Ansprüche, **dadurch gekennzeichnet, dass** der einteilige Führungsring eine radial nach außen gerichtete Gleitbahn aufweist.

8. Baugruppe nach einem der vorhergehenden Ansprüche, **dadurch gekennzeichnet, dass** der einteilige Führungsring ein innerer Lagerring ist, auf dem mindestens eine radial nach außen gerichtete Rollbahn ausgebildet ist.

9. Baugruppe nach Anspruch 8, **dadurch gekennzeichnet, dass** das Führungslager des Weiteren mindestens einen äußeren Laufring (38) umfasst, auf dem mindestens eine radial nach innen gerichtete Rollbahn ausgebildet ist, und Rollkörper (40), die sich auf den Rollbahnen des inneren und des äußeren Rings bewegen.

10. Motoranordnung mit Motorgehäuse (26), **dadurch gekennzeichnet, dass** sie eine Baugruppe nach einem der vorhergehenden Ansprüche umfasst.

11. Motoranordnung nach Anspruch 10, **dadurch gekennzeichnet, dass** die Baugruppe nach Anspruch 2 angeordnet ist und der Führungsring (42) aus dem Motorgehäuse (26) herausragt.

12. Motoranordnung nach einem der Ansprüche 10 oder 11, **dadurch gekennzeichnet, dass** die Baugruppe nach Anspruch 9 angeordnet ist, wobei der Außenring des Führungslagers passgenau und fest in einem radial nach innen gerichteten Lagersitz (50) des Motorgehäuses (26) sitzt.

## Claims

1. An assembly including:
- a crankshaft (10) end portion (12) defining an axis of revolution (100), forming at least one first bearing surface (30) turned radially outward and a shoulder (32) on which threaded holes (34) lead outward;
- a flywheel (24) comprising axial bores (36);
- attachment screws (16) passing through the axial bores of the flywheel and screwed into the threaded holes of the crankshaft end portion, making the flywheel integral with the crankshaft end portion; and
- a bearing (28) for guiding the crankshaft relative to an engine housing (26) in rotation about the axis of revolution;
**characterized in that** the guide bearing comprises at least one unitary guide ring (42) positioned on the first bearing surface (30) and having a first transverse face (44) axially bearing on the shoulder (32), the unitary guide ring comprising axial bores (48) aligned with the threaded holes in the crankshaft (34) and the axial bores of the flywheel (36) and having the screws (16) passing therethrough.

2. An assembly according to claim 1, **characterized in that** the flywheel is directly or indirectly axially bearing against a second transverse face (46) of the unitary guide ring opposite the first transverse face (44).

3. An assembly according to any one of the preceding claims, **characterized in that** the unitary guide ring (42) is shrunk on the first bearing surface and has a surface radially turned inward complementary to the first bearing surface (30).

4. An assembly according to any one of the preceding claims, **characterized in that** the first bearing surface (30) is cylindrical.

5. An assembly according to any one of the preceding claims, **characterized in that** the flywheel (24) is slid onto a second bearing surface (31) formed on the end portion (12) of the crankshaft, the flywheel (24) having a central bore having a surface radially turned inward complementary to the surface of the second bearing surface (31) of the crankshaft.

6. An assembly according to the preceding claim, **characterized in that** the second bearing surface (31) of the end portion of the crankshaft is fluted.

7. An assembly according to any one of the preceding claims, **characterized in that** the unitary guide ring has a sliding track turned radially outward.

8. An assembly according to any one of the preceding claims, **characterized in that** the unitary guide ring is a bearing inner ring on which at least one raceway turned radially outward is formed.

9. An assembly according to claim 8, **characterized in that** the guide bearing further comprises at least one bearing outer ring (38) on which at least one raceway turned radially inward is formed and rolling bodies (40) moving on the raceways of the bearing inner and outer rings.

10. An engine assembly comprising an engine housing (26) **characterized in that** it comprises an assembly according to any one of the preceding claims.

11. An engine assembly according to claim 10, **characterized in that** the assembly is according to claim 2 and the guide ring (42) projects out of the engine housing (26).

12. An engine assembly according to any one of claims 10 or 11, **characterized in that** the assembly is according to claim 9, the outer ring of the guide bearing being fitted tightly in a bearing surface (50) of the engine housing (26) turned radially inward.
